# EUROPÄISCHE PATENTSCHRIFT

(11) **EP 3 195 632 B1**
(45) Veröffentlichungstag und Bekanntmachung des Hinweises auf die Patenterteilung: **09.05.2018**
(21) Anmeldenummer: 15739172.3
(22) Anmeldetag: 11.07.2015
(51) Int. Cl.: H04W 4/00, G05D 1/00

(54) **VERFAHREN UND SYSTEM ZUM FERNSTEUERN EINES KRAFTWAGENS**
METHOD AND SYSTEM FOR REMOTELY CONTROLLING A MOTOR VEHICLE
PROCÉDÉ ET SYSTÈME DE COMMANDE À DISTANCE D'UN VÉHICULE AUTOMOBILE

(30) Priorität: 20.09.2014 DE 102014014136
(43) Veröffentlichungstag der Anmeldung: 26.07.2017
(73) Patentinhaber: Audi AG, 85045 Ingolstadt (DE)
(72) Erfinder: BURGER, Matthias, 85092 Kösching (DE); SCHWIERZ, Markus, 85055 Ingolstadt (DE)
(74) Vertreter: Bauer, Dominik Michael
(86) Internationale Anmeldenummer: PCT/EP2015/001425
(87) Internationale Veröffentlichungsnummer: WO 2016/041611

(56) Entgegenhaltungen:
- DE-A1-102011 112 626
- Anonymous: "Pair a Bluetooth device to your Volvo - Detailed Guide", , 16. Mai 2014 (2014-05-16), Seiten 1-2, XP055220217, Gefunden im Internet: URL:http://support.volvocars.com/uk/Pages/ article.aspx?article=89504ae6abe0c34ec0a80 15112f4889c [gefunden am 2015-10-12]

## Beschreibung

Die Erfindung betrifft ein Verfahren und System zum Fernsteuern eines Kraftwagens mittels eines mobilen Kommunikationsendgeräts.

Üblicherweise erfolgt die Herstellung einer drahtlosen Verbindung zwischen einem mobilen Kommunikationsendgerät, wie beispielsweise einem Smartphone, einem Tablet-Computer oder dergleichen, und einem Kraftwagen nach dem sogenannten "first come, first served" Prinzip. Sobald also dem mobilen Kommunikationsendgerät ein Drahtlosnetzwerk eines bereits angelernten Kraftwagens zur Verfügung steht, wird mit dem ersten verfügbaren Netzwerk eine entsprechende drahtlose Verbindung hergestellt. Auch fahrzeugspezifische Applikationen für mobile Kommunikationsendgeräte, welche beispielsweise in entsprechende Infotainment-Systemen von Kraftwagen integriert sind, bieten bisher keine Möglichkeit eines Fahrzeugnetzwerkwechsels beziehungsweise einer Fahrzeugnetzwerkwahl. Ein gezieltes Verbinden mit einem Fahrzeugnetzwerk ist lediglich über entsprechende Einstellungen des betreffenden mobilen Kommunikationsendgerätes möglich. Dazu muss eine gegebenenfalls falsche Verbindung zunächst getrennt und anschließend nach verfügbaren Netzwerken gesucht werden. Anschließend kann manuell die Verbindung zu einem verfügbaren Netzwerk hergestellt werden. Von Nachteil ist aber die fehlende Möglichkeit des Fahrzeugnetzwerkwechsels beziehungsweise der Fahrzeugnetzwerkwahl mittels eines entsprechend ausgebildeten mobilen Kommunikationsendgerätes. Das gezielte Herstellen einer Verbindung ist lediglich umständlich über ein Einstellungsmenü des betreffenden mobilen Kommunikationsendgerätes möglich.

Die DE 10 2011 112 626 A1 zeigt ein automatisiertes Kopplungsverfahren zwischen einem mobilen Kommunikationsendgerät und einer zentralen Rechnereinheit eines Kraftwagens. Dabei werden jeweilige Daten des mobilen Kommunikationsendgerätes und der zentralen Rechnereinheit des Kraftwagens mit einem Backend-Server ausgetauscht, bevor die automatisierte Kopplung zwischen dem mobilen Kommunikationsendgerät und der zentralen Rechnereinheit erfolgt.

Die DE 10 2010 0385 50 A1 zeigt ein Verfahren zum Steuern von Aktionen mehrerer Fahrzeuge. Dafür können mehrere Fahrzeuge eine sogenannte adhoc-Verbindung aufbauen, wodurch sich mehrere Fahrzeuge zu einem Kommunikationsnetzwerk zusammenschließen können.

Die DE 10 2009 0542 53 A1 zeigt ein Kommunikationsverfahren für einen Kraftwagen. Das dort gezeigte Kommunikationsverfahren zielt vor allem auf Freisprecheinrichtungen in Kraftwagen ab, wobei eine Mehrzahl von mit der Freisprecheinrichtung koppelbarer Mobilfunkgeräte angezeigt werden. Sobald ein Benutzer eines der angezeigten Mobiltelefone ausgewählt hat, wird eine drahtlose Verbindung zwischen dem ausgewählten Mobilfunktelefon und der Freisprecheinrichtung des betreffenden Kraftwagens hergestellt.

Es ist die Aufgabe der vorliegenden Erfindung, eine vereinfachte Herstellung einer drahtlosen Verbindung zwischen einem mobilen Kommunikationsendgerät und einem Kraftwagen zum Fernsteuern des Kraftwagens zu ermöglichen.

Diese Aufgabe wird durch ein Verfahren und durch ein System zum Fernsteuern eines Kraftwagens mittels eines mobilen Kommunikationsendgeräts mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Fernsteuern eines Kraftwagens mittels eines mobilen Kommunikationsendgeräts werden sämtliche Kraftwagen mittels des mobilen Kommunikationsendgeräts angezeigt, mit welchen das mobile Kommunikationsendgerät bereits schon einmal in Form einer drahtlosen Verbindung gekoppelt worden ist. Falls augenblicklich mit mehr als einem der angezeigten Kraftwagen eine drahtlose Verbindung herstellbar ist, wird wie folgt vorgegangen: Sobald erfasst worden ist, dass eines dieser Kraftwagen ausgewählt worden ist, wird eine drahtlose Verbindung zwischen dem ausgewählten Kraftwagen und dem mobilen Kommunikationsendgerät hergestellt. Solange keines dieser Kraftwagen ausgewählt worden ist, wird eine automatische Herstellung einer drahtlosen Verbindung zwischen dem mobilen Kommunikationsendgerät und diesen Kraftwagen unterbunden.

Vorzugsweise erfolgt das Anzeigen derjenigen Kraftwagen, mit welchen das mobile Kommunikationsendgerät bereits schon einmal in Form einer drahtlosen Verbindung gekoppelt worden ist, mittels einer fahrzeug- und/oder funktionsspezifischen Applikation, welche auf dem mobilen Kommunikationsendgerät installiert ist. Das mobile Kommunikationsendgerät stellt also erfindungsgemäß eine Art Auswahlscreen bereit, der alle bereits angelernten Kraftwagen, vorzugsweise mit einem entsprechenden Bild, einer Modellbezeichnung und/oder einem Namen, anzeigt, wodurch ein gezieltes Verbinden mit einem entsprechendem Fahrzeugnetzwerk des gewünschten Kraftwagens ermöglicht wird. Die Auswahl des mittels des mobilen Kommunikationsendgeräts fernzusteuernden Kraftwagens kann somit direkt mittels des mobilen Kommunikationsendgerätes, vorzugsweise mittels der besagten Applikation, erfolgen. Ein Benutzer muss nicht mehr in entsprechenden Systemeinstellungen seines mobilen Kommunikationsendgerätes teilweise kryptische Funkverbindungen auswählen, sondern sieht intuitiv, welche Verbindung er wählen kann.

Vorzugsweise erscheint nach dem Starten der fahrzeug- oder funktionsspezifischen Applikation eine Anzeige, mittels welcher alle bereits angelernten Kraftwagen, also alle Kraftwagen, mit welchen das mobile Kommunikationsendgerät bereits schon einmal in Form einer drahtlosen Verbindung gekoppelt worden ist, dargestellt werden. Dazu verwaltet das mobile Kommunikationsendgerät eine Fahrzeugliste mit allen bereits bekannten Kraftwagen und kann diese dem Benutzer visualisieren. Hat der Benutzer über das mobile Kommunikationsendgerät einen bestimmten Kraftwagen ausgewählt, so wird versucht, eine gezielte Verbindung mit diesem Kraftwagen aufzubauen. Die drahtlose Verbindung kann beispielsweise mittels einer Bluetooth- oder einer Wlan-Verbindung erfolgen. Im Wesentlichen sind aber sämtliche drahtlose Verbindungen, insbesondere Funkverbindungen, geeignet, um das erfindungsgemäße Verfahren durchzuführen.

In vorteilhafter Ausgestaltung der Erfindung ist es vorgesehen, dass mittels des mobilen Kommunikationsendgeräts diejenigen Kraftwagen gekennzeichnet werden, mit welchen augenblicklich eine drahtlose Verbindung mit dem mobilen Kommunikationsendgerät herstellbar ist. Beispielsweise werden die angezeigten Kraftwagen mit einem zusätzlichem Symbol, beispielsweise einem Funksymbol oder dergleichen versehen angezeigt, sodass ein Benutzer des mobilen Kommunikationsendgeräts direkt sehen kann, mit welchem der schon einmal gekoppelten Kraftwagen er gerade eine drahtlose Verbindung aufbauen kann. Beispielsweise kann es auch vorgesehen sein, dass der Benutzer mittels des mobilen Kommunikationsendgerätes eine Pop-up- bzw. eine Push-Nachricht erhält, sobald zumindest mit einem der Kraftwagen eine drahtlose Verbindung hergestellt werden kann, mit welchem das mobile Kommunikationsendgerät bereits schon einmal gekoppelt worden ist. Der Benutzer wird dadurch auf einfache Weise darüber informiert, dass sich ein bereits schon einmal gekoppelter Kraftwagen sich in Reichweite befindet.

Gemäß einer weiteren vorteilhaften Ausführungsform der Erfindung ist es vorgesehen, dass mittels des mobilen Kommunikationsendgeräts derjenige Kraftwagen hervorgehoben wird, mit welchem eine drahtlose Verbindung mit dem mobilen Kommunikationsendgerät hergestellt ist. Durch einen Blick auf das mobile Kommunikationsendgerät kann ein Benutzer somit auf einfache Weise erkennen, mit welchem Kraftwagen er gerade sein mobiles Kommunikationsendgerät gekoppelt hat.

In weiterer vorteilhafter Ausgestaltung der Erfindung ist vorgesehen, dass falls augenblicklich nur mit einem der angezeigten Kraftwagen eine drahtlose Verbindung herstellbar ist, automatisch eine drahtlose Verbindung zwischen diesem Kraftwagen und dem mobilen Kommunikationsendgerät hergestellt wird. Mit anderen Worten kann es vorzugsweise vorgesehen sein, dass immer dann eine automatische Kopplung mit einem bereits zuvor gekoppelten Kraftwagen erfolgt, falls dies der einzige Kraftwagen sein sollte, der sich in Reichweite des mobilen Kommunikationsendgeräts befindet. Alternativ kann es aber genauso gut vorgesehen sein, dass stets eine manuelle Auswahl mittels des mobilen Kommunikationsendgeräts erfolgen muss, bevor eine drahtlose Verbindung mit einem bereits zuvor gekoppelten Kraftwagen hergestellt wird.

In weiterer vorteilhafter Ausgestaltung der Erfindung ist es vorgesehen, dass sobald nach dem Herstellen der drahtlosen Verbindung zwischen dem mobilen Kommunikationsendgerät und einem der Kraftwagen ein anderer angezeigter Kraftwagen an dem mobilen Kommunikationsendgerät ausgewählt wird, die zuvor hergestellte drahtlose Verbindung unterbrochen und eine drahtlose Verbindung mit dem anderen Kraftwagen hergestellt wird. Dadurch wird auf einfache Weise ein Wechsel der drahtlosen Verbindung zwischen verschiedenen Kraftwagen ermöglicht, mit welchen das mobile Kommunikationsendgerät bereits schon einmal gekoppelt worden ist.

Eine weitere vorteilhafte Ausführungsform der Erfindung sieht vor, dass sobald die drahtlose Verbindung zwischen dem ausgewähltem Kraftwagen und dem mobilen Kommunikationsendgerät hergestellt worden ist, zumindest einen zuvor noch deaktivierte Funktionseinheit des Kraftwagens mittels des mobilen Kommunikationsendgeräts aktiviert und insbesondere auch angesteuert wird. Mit anderen Worten kann durch die gezielte Herstellung der drahtlosen Verbindung zu einem der Kraftwagen auch das Aufwecken des zuvor deaktivierten Kraftwagens angesteuert werden. Dadurch, dass erst nach einer gezielten Auswahl von einem der angezeigten Kraftwagen die entsprechende drahtlose Verbindung hergestellt wird, wird insbesondere ein versehentliches Aufwecken eines zuvor deaktivierten Kraftwagens verhindert. Beispielsweise kann eine Zündung, also der Zustand Klemme 15 ein, aktiviert werden, sobald die drahtlose Verbindung zwischen dem ausgewählten Kraftwagen und dem mobilen Kommunikationsendgerät hergestellt worden ist. Ferner kann es auch vorgesehen sein, dass sobald die drahtlose Verbindung zwischen dem ausgewählten Kraftwagen und dem mobilen Kommunikationsendgerät hergestellt worden ist, verschiedenste Funktionseinheiten des betreffenden Kraftwagens, wie beispielsweise eine Standheizung, Fensterheber, Lichteinstellungen, eine Hupe oder dergleichen mittels des mobilen Kommunikationsendgeräts, vorzugsweise über ein entsprechendes Bedienmenü, angesteuert werden können.

Eine weitere vorteilhafte Ausführungsform der Erfindung sieht vor, dass die Funktionseinheit ein Parkassistent des Kraftwagens ist, wobei das mobile Kommunikationsgerät den Parkassistenten derart ansteuert, dass der Kraftwagens mittels des Parkassistenten automatisch aus seiner Parklücke ausgeparkt oder in diese eingeparkt wird, falls eine vorbestimmte Benutzereingabe am mobilen Kommunikationsendgerät erfasst worden ist. In diesem Zusammenhang ist es vorzugsweise ebenfalls vorgesehen, dass sobald die drahtlose Verbindung hergestellt worden ist, die Zündung des betreffenden Kraftwagens aktiviert und ein Motor des Kraftwagens gestartet wird, sodass der Parkassistent, drahtlos angesteuert durch das mobile Kommunikationsendgerät, den automatischen Einpark- beziehungsweise Ausparkvorgang vornehmen kann.

Gemäß einer weiteren vorteilhaften Ausführungsform der Erfindung ist es vorgesehen, dass zum Ermitteln, ob augenblicklich zwischen dem mobilen Kommunikationsendgerät und den angezeigten Kraftwagen eine drahtlose Verbindung herstellbar ist, überprüft wird, ob jeweilige, von den Kraftwagen drahtlos und zyklisch ausgesendete Anfragesignale von dem mobilen Kommunikationsendgerät empfangen werden. Mit anderen Worten senden die Kraftwagen dauerhaft ihre Verfügbarkeit aus, während diese deaktiviert sind. Die Kraftwagen können über ein entsprechendes Funkmodul verfügen, mittels welchen sekündlich, beispielsweise im zwei bis drei Sekundenabstand, als Anfragesignale dienende Triggersignale fahrzeugseitig ausgesendet werden können, insbesondere auch im Zustand Klemme 15 aus.

Eine weitere vorteilhafte Ausführungsform der Erfindung sieht vor, dass zum Ermitteln, ob augenblicklich zwischen dem mobilen Kommunikationsendgerät und den Kraftwagen eine drahtlose Verbindung herstellbar ist, überprüft wird, ob jeweilige, in Abhängigkeit von den empfangenen Anfragesignalen mittels des mobilen Kommunikationsendgeräts drahtlos ausgesendete Antwortsignale von den Kraftwagen empfangen werden. Dadurch kann sichergestellt werden, dass entsprechende drahtlose Signale auch fahrzeugseitig empfangen werden können.

Das erfindungsgemäße System zum Fernsteuern eines Kraftwagens umfasst ein mobiles Kommunikationsendgerät, welches dazu ausgebildet ist, sämtliche Kraftwagen des Systems anzuzeigen, mit welchen das mobile Kommunikationsendgerät bereits schon einmal in Form einer drahtlosen Verbindung gekoppelt worden ist. Das erfindungsgemäße System umfasst des Weiteren eine Steuereinrichtung, welche dazu ausgebildet ist, falls augenblicklich mit mehr als einem der angezeigten Kraftwagen eine drahtlose Verbindung herstellbar ist, eine drahtlose Verbindung zwischen einem dieser Kraftwagen und dem mobilen Kommunikationsendgerät nur dann herzustellen, sobald erfasst worden ist, dass eines dieser Kraftwagen mittels dem mobilen Kommunikationsendgerät ausgewählt worden ist. Ferner ist die Steuereinrichtung auch dazu ausgebildet, falls augenblicklich mit mehr als einem der angezeigten Kraftwagen eine drahtlose Verbindung herstellbar ist, eine Herstellung einer drahtlosen Verbindung zwischen dem mobilen Kommunikationsendgerät und diesen Kraftwagen zu unterbinden, solange keines dieser Kraftwagen mittels dem mobilen Kommunikationsendgerät ausgewählt worden ist. Vorteilhafte Ausgestaltungen des erfindungsgemäßen Verfahrens sind als vorteilhafte Ausgestaltungen des erfindungsgemäß0en Systems anzusehen, wobei das System insbesondere Mittel zum Durchführen der Verfahrensschritte aufweist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

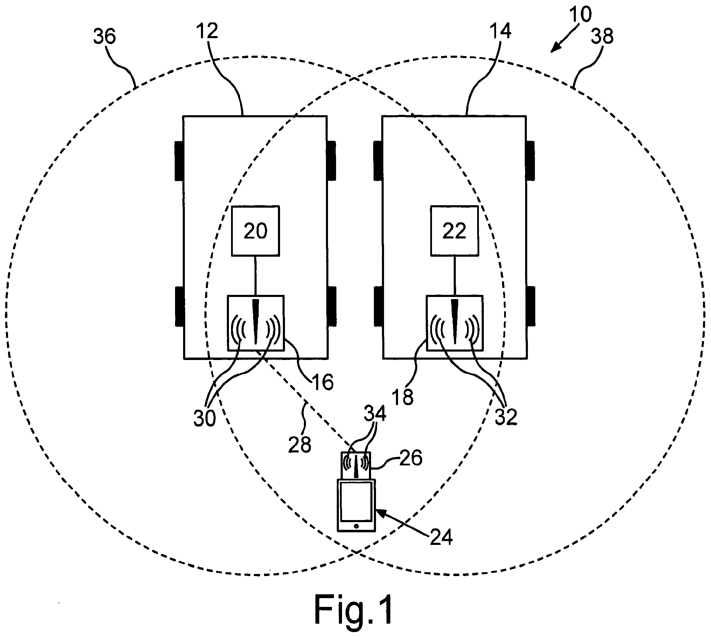

- Fig. 1: eine schematische Darstellung eines Systems zum Fernsteuern eines Kraftwagens mittels eines mobilen Kommunikationsendgeräts;

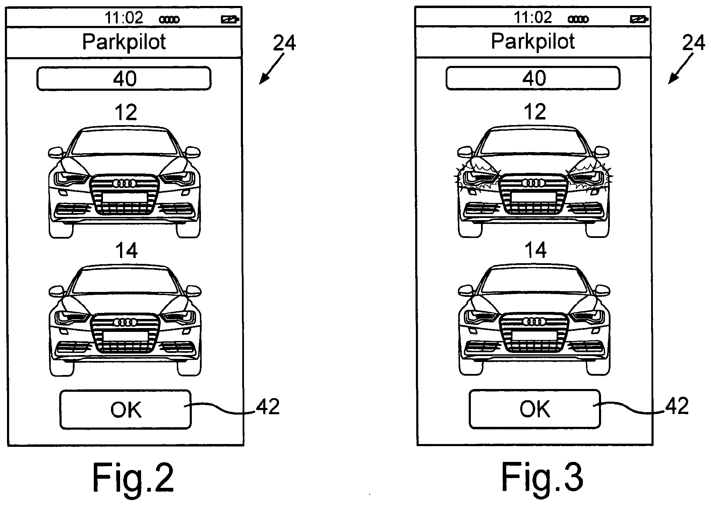

- Fig. 2: eine Darstellung des mobilen Kommunikationsendgeräts, wobei dieses diejenigen Kraftwagen des Systems anzeigt, mit welchen das mobile Kommunikationsendgerät bereits schon einmal in Form einer drahtlosen Verbindung gekoppelt worden ist, wobei im vorliegend gezeigten Fall noch keine drahtlose Verbindung zu einem der Kraftwagen aufgebaut worden ist; und in
- Fig. 3:: erneut das mobile Kommunikationsendgerät, mittels welchem diejenigen Kraftwagen des Systems angezeigt werden, mit welchen das mobile Kommunikationsendgerät bereits schon einmal in Form einer drahtlosen Verbindung gekoppelt worden ist, wobei vorliegend eine drahtlose Verbindung mit einen der Kraftwagen hergestellt worden ist.

In den Figuren werden gleiche oder funktionsgleiche Elemente mit gleichen Bezugszeichen versehen.

Ein insgesamt mit 10 bezeichnetes System zum Fernsteuern unterschiedlicher Kraftwagen 12, 14 ist in einer schematischen Darstellung in Fig. 1 gezeigt. Die Kraftwagen 12, 14 weisen jeweils ein Funkmodul 16, 18 sowie jeweils eine mit den Funkmodulen 16, 18 verbundene Steuereinrichtung 20, 22 auf. Ferner umfasst das hier gezeigte System 10 ein mobiles Kommunikationsendgerät 24, welches ebenfalls ein Funkmodul 26 aufweist. Bei dem mobilen Kommunikationsendgerät 24 kann es sich zum Beispiel um ein Smartphone oder auch um einen Tablet-Computer handeln.

Das mobile Kommunikationsendgerät 24 ist dazu ausgebildet, sämtliche Kraftwagen 12, 14 des Systems 10 anzuzeigen, mit welchen das mobile Kommunikationsendgerät 24 bereits schon einmal in Form einer drahtlosen Verbindung 28 gekoppelt worden ist. Die Steuereinrichtungen 20, 22 sind dazu ausgebildet, falls augenblicklich mit mehr als einem der angezeigten Kraftwagen 12, 14 eine drahtlose Verbindung 28 herstellbar ist, eine drahtlose Verbindung 28 zwischen einem dieser Kraftwagen 12, 14 und dem mobilen Kommunikationsendgerät 24 nur dann herzustellen, sobald erfasst worden ist, dass eines dieser Kraftwagen 12, 14 mittels dem mobilen Kommunikationsendgerät 24 ausgewählt worden ist. Ferner sind die Steuereinrichtungen 20, 22 dazu ausgebildet, falls augenblicklich mit mehr als einen der angezeigten Kraftwagen 12, 14 eine drahtlose Verbindung herstellbar ist, eine Herstellung einer drahtlosen Verbindung 28 zwischen dem mobilen Kommunikationsendgerät 24 und diesen Kraftwagen 12, 14 zu unterbinden, solange keines dieser Kraftwagen 12, 14 mittels dem mobilen Kommunikationsendgerät 24 ausgewählt worden ist.

Vorliegend sind die besagten Steuereinrichtungen 20, 22 Teil der Kraftwagen 12, 14. Stattdessen kann es auch vorgesehen sein, dass das mobile Kommunikationsendgerät 24 eine entsprechende Steuereinrichtung aufweist, welche in analoger Weise dazu ausgebildet ist, die jeweiligen drahtlosen Verbindungen 28 herzustellen beziehungsweise die Herstellung der drahtlosen Verbindung 28 zu unterbinden.

Nachfolgend wird ein Verfahren zum Fernsteuern der Kraftwagen 12, 14 mittels des mobilen Kommunikationsendgeräts 24 näher erläutert.

In Fig. 2 ist das mobile Kommunikationsendgerät 24 dargestellt, wobei dieses die beiden Kraftwagen 12, 14 anzeigt, da mit diesen bereits schon einmal eine Kopplung in Form einer drahtlosen Verbindung 28 erfolgt ist. Vorliegend werden jeweilige Abbildungen der Kraftwagen 12, 14 mittels des mobilen Kommunikationsendgeräts 24 angezeigt. Alternativ oder zusätzlich ist es auch möglich, dass beispielsweise eine jeweilige Modellbezeichnung, ein Name oder dergleichen für die jeweiligen Kraftwagen 12, 14 angezeigt wird.

Zum Ermitteln, ob augenblicklich zwischen dem mobilen Kommunikationsendgerät 24 und den angezeigten Kraftwagen 12, 14 eine drahtlose Verbindung 28 herstellbar ist, wird überprüft, ob jeweilige, von den Kraftwagen 12, 14 drahtlos und zyklisch ausgesendete Anfragesignale 30, 32 von dem mobilen Kommunikationsendgerät 24 empfangen werden. Des Weiteren wird zum Ermitteln, ob augenblicklich zwischen dem mobilen Kommunikationsendgerät 24 und den Kraftwagen 12, 14 eine drahtlose Verbindung 28 herstellbar ist, überprüft, ob jeweilige, in Abhängigkeit von den empfangenen Anfragesignalen 30, 32 mittels des mobilen Kommunikationsendgeräts 24 drahtlos ausgesendete Antwortsignale 34 von den Kraftwagen 12, 14 empfangen werden.

Mit den Funkreichweiten 36, 38 sind jeweilige Reichweiten der Funkmodule 16, 18 der Kraftwagen 12, 14 schematisch gekennzeichnet. Wie zu erkennen, befindet sich das mobile Kommunikationsendgerät 24 innerhalb der Funkreichweiten der Funkmodule 16, 18. Beispielsweise können die beiden Kraftwagen 12, 14 in einer hier nicht dargestellten Garage geparkt sein, wobei ein Benutzer des Kommunikationsendgeräts 24 sich in einem zur Garage gehörendem Haus aufhält, sodass das Kommunikationsendgerät 24 noch innerhalb der Funkreichweiten 36, 38 der Funkmodule 16, 18 der Kraftwagen 12, 14 angeordnet ist.

Mittels des mobilen Kommunikationsendgeräts 24 werden diejenigen Kraftwagen, vorliegend also beide Kraftwagen 12, 14, gekennzeichnet, mit welchen augenblicklich eine drahtlose Verbindung 28 mit dem mobilen Kommunikationsendgerät 24 herstellbar ist. Beispielsweise können die mittels des mobilen Kommunikationsendgeräts 24 angezeigten Kraftwagen 12, 14 noch mit einem Funksymbol oder dergleichen versehen werden, sobald eine Herstellung einer drahtlosen Verbindung möglich ist. Ferner kann beispielsweise eine Nachricht 40 mittels des mobilen Kommunikationsendgeräts 24 angezeigt werden, sobald eine drahtlose Verbindung mit den Kraftwagen 12, 14 hergestellt werden kann.

Beispielsweise handelt es sich bei dem mobilen Kommunikationsendgerät 24 um ein Smartphone mit einem Touchscreen. In diesem Fall wählt der Benutzer durch Antippen des mittels des mobilen Kommunikationsendgeräts 24 angezeigten Kraftwagens 12 diesen aus und bestätigt die Auswahl durch betätigen der Bestätigungstaste 42.

In Fig. 3 ist erneut das mobile Kommunikationsendgerät 24 angezeigt, wobei zu erkennen ist, dass der angezeigte Kraftwagen 12 nun optisch hervorgehoben wird. Sobald erfasst worden ist, dass der Kraftwagen 12 durch den Benutzer mittels des mobilen Kommunikationsendgeräts 24 ausgewählt worden ist, wird eine drahtlose Verbindung 28 zwischen dem mobilen Kommunikationsendgerät 24 und dem Kraftwagen 12 hergestellt. Beispielsweise kann die drahtlose Verbindung 28 zwischen den jeweiligen Funkmodulen 26, 16 des mobilen Kommunikationsendgeräts 24 und des Kraftwagens 12 erfolgen. Der Kraftwagen 12 wird nun optisch hervorgehoben dargestellt, sobald die drahtlose Verbindung 28 hergestellt worden ist, beispielsweise wie hier gezeigt dadurch, dass eine Scheinwerferanimation angezeigt wird.

Sobald die drahtlose Verbindung 28 zwischen dem ausgewählten Kraftwagen 12 und dem mobilen Kommunikationsendgerät 24 hergestellt worden ist, wird zumindest eine zuvor noch deaktivierte Funktionseinheit des Kraftwagens 12 mittels des mobilen Kommunikationsendgeräts 24 aktiviert und insbesondere auch angesteuert. Beispielsweise kann es sich bei der betreffenden Funktionseinheit um einen Parkassistenten des Kraftwagens 12 handeln, wobei das mobile Kommunikationsendgerät 24 den Parkassistenten derart ansteuert, dass der Kraftwagen mittels des Parkassistenten automatisch aus einer Parklücke, beispielsweise einer Garage, ausgeparkt oder in diese eingeparkt wird, falls eine vorbestimmte Benutzerangabe am mobilen Kommunikationsendgerät 24 erfasst worden ist. Beispielsweise kann nach dem Herstellen der drahtlosen Verbindung 28 zwischen dem mobilen Kommunikationsendgerät 24 und dem Kraftwagen 12 eine entsprechende, hier nicht dargestellte graphische Benutzeroberfläche mittels des mobilen Kommunikationsendgeräts 24 angezeigt werden, mittels welcher der Parkassistent gesteuert werden kann. Damit der automatische Parkvorgang vorgenommen werden kann, wird spätestens nach Aktivierung des Parkassistenten auch eine Zündung des Kraftwagens 12 aktiviert und anschließend ein Motor des Kraftwagens 12 gestartet, sodass der automatische Einpark- beziehungsweise Ausparkvorgang vorgenommen werden kann.

Ferner ist es auch möglich, dass sobald die drahtlose Verbindung 28 zwischen dem mobilen Kommunikationsendgerät 24 und dem Kraftwagen 12 hergestellt worden ist, verschiedenste Funktionseinheiten des Kraftwagens 12, wie beispielsweise eine Standheizung, Fensterheber, eine Lichtanlage, eine Hupe oder dergleichen, mittels des mobilen Kommunikationsendgeräts 24 ferngesteuert werden können.

Dadurch, dass für den Fall, dass augenblicklich mit mehr als einem der angezeigten Kraftwagen 12, 14 eine drahtlose Verbindung 28 herstellbar ist, erst die Herstellung der drahtlosen Verbindung 28 erfolgt, nachdem einer der beiden Kraftwagen 12, 14 aktiv durch einen Benutzer ausgewählt worden ist, wird insbesondere ein versehentliches Aufwecken der betreffenden Kraftwagen 12, 14 verhindert.

Falls entgegen der Darstellung in Fig. 1 augenblicklich nur mit einem der Kraftwagen 12, 14 eine drahtlose Verbindung 28 herstellbar ist, so kann es vorgesehen sein, dass automatisch eine drahtlose Verbindung 28 zwischen einem dieser Kraftwagen 12, 14 und dem mobilen Kommunikationsendgerät 24 hergestellt wird. Beispielsweise könnte es sein, dass der Kraftwagen 14 so weit entfernt von dem Kraftwagen 12 abgestellt ist, dass keine drahtlose Verbindung mehr zwischen dem Kraftwagen 14 und dem mobilen Kommunikationsendgerät 24 hergestellt werden kann. Es werden zwar beide Kraftwagen 12, 14 mittels der mobilen Kommunikationseinrichtung 24 angezeigt, da mit beiden Kraftwagen 12, 14 bereits zuvor schon einmal eine Kopplung erfolgt ist. Dabei würde aber lediglich der Kraftwagen 12 mittels der mobilen Kommunikationseinrichtung 24 entsprechend gekennzeichnet werden, um einem Benutzer zu verdeutlichen, dass augenblicklich nur mit diesem Kraftwagen 12 eine drahtlose Verbindung hergestellt werden kann. Alternativ kann es aber auch vorgesehen sein, dass immer eine aktive Auswahl der Kraftwagen 12, 14 über das mobile Kommunikationsendgerät 24 erfolgen muss, bevor eine drahtlose Verbindung 28 mit dem betreffenden Kraftwagen 12, 14 hergestellt wird.

Sobald nach dem Herstellen der drahtlosen Verbindung 28 zwischen dem mobilen Kommunikationsendgerät 24 und dem Kraftwagen 12 der andere Kraftwagen 14 an dem mobilen Kommunikationsendgerät 24 ausgewählt wird, wird die zuvor hergestellte drahtlose Verbindung 28 zwischen dem mobilen Kommunikationsendgerät 24 und dem Kraftwagen 12 unterbrochen und eine drahtlose Verbindung 28 mit dem anderen Kraftwagen 14 hergestellt - sofern dies möglich ist. Ein Benutzer kann somit auf besonders einfache Weise zuvor hergestellte drahtlose Verbindungen 28 unterbrechen und neue drahtlose Verbindungen mit anderen Kraftwagen herstellen, mit welchen das mobile Kommunikationsendgerät 24 bereits zuvor schon einmal gekoppelt worden ist.

Auf dem mobilen Kommunikationsendgerät 24 ist dafür vorzugsweise eine Fahrzeug- oder funktionsspezifische Applikation installiert, mittels welcher die zuvor erläuterten Verfahrensschritte durchgeführt werden können. Es wird also eine gezielte Verbindungsauswahl mit den unterschiedlichen bereits schon einmal gekoppelten Kraftwagen 12, 14 ermöglicht, wobei auch jederzeit ein Wechsel der drahtlosen Verbindungen über diese Applikation ermöglicht wird. Ferner wird durch die Applikation auch ein Aufwecken von zuvor deaktivierten Kraftwagen ermöglicht.

## Patentansprüche

1. Verfahren zum Fernsteuern eines Kraftwagens (12, 14) mittels eines mobilen Kommunikationsendgeräts (24), mit den Schritten:
- Anzeigen sämtlicher Kraftwagen (12, 14) mittels des mobilen Kommunikationsendgeräts (24), mit welchen das mobile Kommunikationsendgerät (24) bereits schon einmal in Form einer drahtlosen Verbindung (28) gekoppelt worden ist;
**dadurch gekennzeichnet, dass**
- falls augenblicklich mit mehr als einem der angezeigten Kraftwagen (12, 14) eine drahtlose Verbindung (28) herstellbar ist:
▪ sobald erfasst worden ist, dass eines dieser Kraftwagen (12, 14) ausgewählt worden ist: Herstellen einer drahtlosen Verbindung (28) zwischen dem ausgewählten Kraftwagen (12, 14) und dem mobilen Kommunikationsendgerät (24);
▪ solange keines dieser Kraftwagen (12, 14) ausgewählt worden ist: Unterbinden einer automatischen Herstellung einer drahtlosen Verbindung (28) zwischen dem mobilen Kommunikationsendgerät (24) und diesen Kraftwagen (12, 14).

2. Verfahren nach Anspruch 1,
**dadurch gekennzeichnet, dass**
mittels des mobilen Kommunikationsendgeräts (24) diejenigen Kraftwagen (12, 14) gekennzeichnet werden, mit welchen augenblicklich eine drahtlose Verbindung (28) mit dem mobilen Kommunikationsendgerät (24) herstellbar ist.

3. Verfahren nach Anspruch 1 oder 2,
**dadurch gekennzeichnet, dass**
mittels des mobilen Kommunikationsendgeräts (24) derjenige Kraftwagen (12, 14) optisch hervorgehoben wird, mit welchem eine drahtlose Verbindung (28) mit dem mobilen Kommunikationsendgerät (24) hergestellt ist.

4. Verfahren nach einem der vorhergehenden Ansprüche,
**dadurch gekennzeichnet, dass**
falls augenblicklich nur mit einem der angezeigten Kraftwagen (12, 14) eine drahtlose Verbindung (28) herstellbar, automatisch eine drahtlose Verbindung (28) zwischen diesem Kraftwagen (12, 14) und dem mobilen Kommunikationsendgerät (24) hergestellt wird.

5. Verfahren nach einem der vorhergehenden Ansprüche,
**dadurch gekennzeichnet, dass**
sobald nach dem Herstellen der drahtlosen Verbindung (28) zwischen dem mobilen Kommunikationsendgerät (24) und einem der Kraftwagen (12, 14) ein anderer angezeigter Kraftwagen (12, 14) an dem mobilen Kommunikationsendgerät (24) ausgewählt wird, die zuvor hergestellte drahtlose Verbindung (28) unterbrochen und eine drahtlose Verbindung (28) mit dem anderen Kraftwagen (12, 14) herstellt wird.

6. Verfahren nach einem der vorhergehenden Ansprüche,
**dadurch gekennzeichnet, dass**
sobald die drahtlose Verbindung (28) zwischen dem ausgewählten Kraftwagen (12, 14) und dem mobilen Kommunikationsendgerät (24) hergestellt worden ist, zumindest eine zuvor noch deaktivierte Funktionseinheit des Kraftwagens mittels des mobilen Kommunikationsendgeräts (24) aktiviert und insbesondere auch angesteuert wird.

7. Verfahren nach Anspruch 6,
**dadurch gekennzeichnet, dass**
die Funktionseinheit ein Parkassistent des Kraftwagens ist, wobei das mobile Kommunikationsendgerät (24) den Parkassistenten derart ansteuert, dass der Kraftwagen (12, 14) mittels des Parkassistenten automatisch aus einer Parklücke ausgeparkt oder in diese eingeparkt wird, falls eine vorbestimmte Benutzereingabe am mobilen Kommunikationsendgerät (24) erfasst worden ist.

8. Verfahren nach einem der vorhergehenden Ansprüche,
**dadurch gekennzeichnet, dass**
zum Ermitteln, ob augenblicklich zwischen dem mobilen Kommunikationsendgerät (24) und den angezeigten Kraftwagen (12, 14) eine drahtlose Verbindung (28) herstellbar ist, überprüft wird, ob jeweilige, von den Kraftwagen (12, 14) drahtlos und zyklisch ausgesendete Anfragesignale (30, 32) von dem mobilen Kommunikationsendgerät (24) empfangen werden.

9. Verfahren nach Anspruch 8,
**dadurch gekennzeichnet, dass**
zum Ermitteln, ob augenblicklich zwischen dem mobilen Kommunikationsendgerät (24) und den Kraftwagen (12, 14) eine drahtlose Verbindung (28) herstellbar ist, überprüft wird, ob jeweilige, in Abhängigkeit von den empfangenen Anfragesignalen (30, 32) mittels des mobilen Kommunikationsendgeräts (24) drahtlos ausgesendete Antwortsignale (34) von den Kraftwagen (12, 14) empfangen werden.

10. System (10) zum Fernsteuern eines Kraftwagens (12, 14), mit
- einem mobilen Kommunikationsendgerät (24), welches dazu ausgebildet ist, sämtliche Kraftwagen (12, 14) des Systems (10) anzuzeigen, mit welchen das mobile Kommunikationsendgerät (24) bereits schon einmal in Form einer drahtlosen Verbindung (28) gekoppelt worden ist;
**gekennzeichnet durch**
- eine Steuereinrichtung (20, 22), welche dazu ausgebildet ist, falls augenblicklich mit mehr als einem der angezeigten Kraftwagen (12, 14) eine drahtlose Verbindung (28) herstellbar ist,
▪ eine drahtlose Verbindung (28) zwischen einem dieser Kraftwagen (12, 14) und dem mobilen Kommunikationsendgerät (24) nur dann herzustellen, sobald erfasst worden ist, dass eines dieser Kraftwagen (12, 14) mittels des mobilen Kommunikationsendgeräts (24) ausgewählt worden ist;
▪ eine Herstellung einer drahtlosen Verbindung (28) zwischen dem mobilen Kommunikationsendgerät (24) und diesen Kraftwagen (12, 14) zu unterbinden, solange keines dieser Kraftwagen (12, 14) mittels des mobilen Kommunikationsendgeräts (24) ausgewählt worden ist.

## Claims

1. Method for remotely controlling a motor vehicle (12, 14) using a mobile communication terminal (24), comprising the steps of:
- using the mobile communication terminal (24) to display all of the motor vehicles (12, 14) to which said mobile communication terminal (24) has already been coupled in the form of a wireless connection (28);
**characterised in that**
- in cases where it is currently possible to establish a wireless connection (28) with more than one of the displayed motor vehicles (12, 14):
- as soon as it has been detected that one of these motor vehicles (12, 14) has been selected: establishing a wireless connection (28) between said selected motor vehicle (12, 14) and the mobile communication terminal (24);
- and while none of these motor vehicles (12, 14) has been selected: preventing a wireless connection (28) from being established automatically between said mobile communication terminal (24) and these motor vehicles (12, 14).

2. Method according to claim 1,
**characterised in that**
those motor vehicles (12, 14), with which currently a wireless connection (28) with the mobile communication terminal (24) can be established, are **characterised by** means of the mobile communication terminal (24).

3. Method according to claim 1 or 2,
**characterised in that**
the motor vehicle (12, 14), with which a wireless connection (28) with the mobile communication terminal (24) is established, is highlighted visually by means of the mobile communication terminal (24).

4. Method according to any one of the preceding claims,
**characterised in that**
in cases where it is currently possible to establish a wireless connection (28) with only one of the displayed motor vehicles (12, 14), a wireless connection (28) is established automatically between this motor vehicle (12, 14) and the mobile communication terminal (24).

5. Method according to any one of the preceding claims,
**characterised in that**
as soon as another displayed motor vehicle (12, 14) is selected on the mobile communication terminal (24) after the establishing of the wireless connection (28) between the mobile communication terminal (24) and one of the motor vehicles (12, 14), the previously established wireless connection (28) is interrupted and a wireless connection (28) is established with the other motor vehicle (12, 14).

6. Method according to any one of the preceding claims,
**characterised in that**
as soon as the wireless connection (28) has been established between the selected motor vehicle (12, 14) and the mobile communication terminal (24), at least one previously still disabled functional unit of the motor vehicle is enabled and more particularly also controlled by means of the mobile communication terminal (24).

7. Method according to claim 6,
**characterised in that**
the functional unit is a parking assistant of the motor vehicle, wherein the mobile communication terminal (24) controls the parking assistant in such a way, that the motor vehicle (12, 14) is automatically moved out of a parking space or moved into the same by means of the parking assistant, if a predetermined user input has been detected on the mobile communication terminal (24).

8. Method according to any one of the preceding claims,
**characterised in that**
to determine whether a wireless connection (28) can currently be established between the mobile communication terminal (24) and the displayed motor vehicles (12, 14), checks are carried out, to discover whether pertaining enquiry signals (30, 32) sent out wirelessly and cyclically from the motor vehicles (12, 14) are received by the mobile communication terminal (24).

9. Method according to claim 8,
**characterised in that**
to determine whether a wireless connection (28) can currently be established between the mobile communication terminal (24) and the motor vehicles (12, 14), checks are carried out, to discover whether pertaining response signals (34) sent out wirelessly by means of the mobile communication terminal (24) in dependence on the received enquiry signals (30, 32) are received by the motor vehicles (12, 14).

10. System (10) for remotely controlling a motor vehicle (12, 14), comprising
- a mobile communication terminal (24), which is configured to display all of the motor vehicles (12, 14) of the system (10) to which said mobile communication terminal (24) has already been coupled in the form of a wireless connection (28);
**characterised by**
- a control device (20, 22), which is configured, in cases where it is currently possible to establish a wireless connection (28) with more than one of the displayed motor vehicles (12, 14),
- to establish a wireless connection (28) between one of these motor vehicles (12, 14) and said mobile communication terminal (24), only as soon as it has been detected that one of these motor vehicles (12, 14) has been selected by means of the mobile communication terminal (24);
- to prevent a wireless connection (28) from being established between said mobile communication terminal (24) and these motor vehicles (12, 14), while none of these motor vehicles (12, 14) has been selected by means of the mobile communication terminal (24).

## Revendications

1. Procédé de commande à distance d'un véhicule automobile (12, 14) au moyen d'un terminal de communication mobile (24), avec les étapes consistant à :
- afficher au moyen du terminal de communication mobile (24) tous les véhicules automobiles (12, 14) avec lesquels le terminal de communication mobile (24) a déjà été couplé une fois sous la forme d'une connexion sans fil (28) ; **caractérisé en ce que** :
- au cas où une connexion sans fil (28) peut être établie instantanément avec plus d'un des véhicules automobiles affichés (12, 14) :
• aussitôt qu'il a été détecté que l'un de ces véhicules automobiles (12, 14) a été choisi : par l'établissement d'une connexion sans fil (28) entre le véhicule automobile choisi (12, 14) et le terminal de communication mobile (24) ;
• aussi longtemps qu'aucun de ces véhicules automobiles (12, 14) n'a été choisi : par l'interruption d'un établissement automatique d'une connexion sans fil (28) entre le terminal de communication mobile (24) et ces véhicules automobiles (12, 14).

2. Procédé selon la revendication 1,
**caractérisé en ce que** :
l'on caractérise au moyen du terminal de communication mobile (24) les véhicules automobiles (12, 14) avec lesquels une connexion sans fil (28) avec le terminal de communication mobile (24) peut être établie instantanément.

3. Procédé selon la revendication 1 ou 2,
caractérisé en ce :
on met en surbrillance au plan optique au moyen du terminal de communication mobile (24) le véhicule automobile (12, 14) avec lequel une connexion sans fil (28) est établie avec le terminal de communication mobile (24).

4. Procédé selon l'une quelconque des revendications précédentes,
**caractérisé en ce que** :
au cas où une connexion sans fil (28) peut être établie instantanément seulement avec l'un des véhicules automobiles affichés (12, 14), automatiquement une connexion sans fil (28) est établie entre ce véhicule automobile (12, 14) et le terminal de communication mobile (24).

5. Procédé selon l'une quelconque des revendications précédentes,
**caractérisé en ce que** :
aussitôt qu'un autre véhicule automobile affiché (12, 14) est choisi sur le terminal de communication mobile (24) après l'établissement de la connexion sans fil (28) entre le terminal de communication mobile (24) et l'un des véhicules automobiles (12, 14), la connexion sans fil précédemment établie (28) est interrompue et une connexion sans fil (28) est établie avec l'autre véhicule automobile (12, 14).

6. Procédé selon l'une quelconque des revendications précédentes,
**caractérisé en ce que** :
aussitôt que la connexion sans fil (28) a été établie entre le véhicule automobile choisi (12, 14) et le terminal de communication mobile (24), au moins une unité fonctionnelle précédemment encore désactivée du véhicule automobile est activée au moyen du terminal de communication mobile (24) et en particulier également commandée.

7. Procédé selon la revendication 6,
**caractérisé en ce que** :
l'unité fonctionnelle est un assistant de stationnement du véhicule automobile, dans lequel le terminal de communication mobile (24) commande l'assistant de stationnement de sorte que le véhicule automobile (12, 14) soit retiré d'un créneau de stationnement ou introduit dans celui-ci automatiquement au moyen de l'assistant de stationnement au cas où une entrée utilisateur prédéterminée a été détectée sur le terminal de communication mobile (24).

8. Procédé selon l'une quelconque des revendications précédentes,
**caractérisé en ce que** :
pour déterminer si une connexion sans fil (28) peut être établie instantanément entre le terminal de communication mobile (24) et le véhicule automobile affiché (12, 14), on vérifie si des signaux de demande respectifs (30, 32) émis par les véhicules automobiles (12, 14) sans fil et de manière cyclique sont reçus par le terminal de communication mobile (24).

9. Procédé selon la revendication 8,
**caractérisé en ce que** :
pour déterminer si une connexion sans fil (28) peut être établie instantanément entre le terminal de communication mobile (24) et les véhicules automobiles (12, 14), on vérifie si des signaux de réponse respectifs (34) émis sans fil au moyen du terminal de communication mobile (24) en fonction des signaux de demande reçus (30, 32) ont été reçus par les véhicules automobiles (12, 14).

10. Système (10) de commande à distance d'un véhicule automobile (12, 14), comprenant :
- un terminal de communication mobile (24) qui est conçu de manière à afficher tous les véhicules automobiles (12, 14) du système (10) avec lesquels le terminal de communication mobile (24) a été déjà couplé une fois sous la forme d'une connexion sans fil (28) ;
**caractérisé par** :
- un dispositif de commande (20, 22) qui est conçu de manière, dans le cas où une connexion sans fil (28) peut être établie instantanément avec plus d'un des véhicules automobiles affichés (12, 14),
• à établir une connexion sans fil (28) entre l'un de ces véhicules automobiles (12, 14) et le terminal de communication mobile (24) uniquement aussitôt qu'il a été détecté que l'un de ces véhicules (12, 14) a été choisi au moyen du terminal de communication mobile (24) ;
• à interrompre un établissement d'une connexion sans fil (28) entre le terminal de communication mobile (24) et ces véhicules automobiles (12, 14) aussi longtemps qu'aucun de ces véhicules automobiles (12, 14) n'a été choisi au moyen du terminal de communication mobile (24).
